(19) Europäisches Patentamt
European Patent Office
Office européen des brevets

(11) Publication number: 0 070 092
B1

(12) # EUROPEAN PATENT SPECIFICATION

(45) Date of publication of patent specification: **05.11.86**

(51) Int. Cl.$^4$: **C 08 K 5/00**, C 08 L 101/00, C 08 L 27/06

(21) Application number: **82302755.2**

(22) Date of filing: **27.05.82**

(54) **Stabilising materials for halogen-containing polymers, polymer compositions containing the same and shaped articles formed therefrom.**

(30) Priority: **02.06.81 US 269085**
**18.05.82 US 379426**

(43) Date of publication of application:
**19.01.83 Bulletin 83/03**

(45) Publication of the grant of the patent:
**05.11.86 Bulletin 86/45**

(84) Designated Contracting States:
**AT BE CH DE FR GB IT LI NL SE**

(56) References cited:
**EP-A-0 002 007**

**CHEMICAL ABSTRACTS, vol. 83, no. 26, 29th December 1975, page 43, no. 207117c, Columbus, Ohio, USA**

(73) Proprietor: **MORTON THIOKOL, INC.**
**110 North Wacker Drive**
**Chicago Illinois 60606 (US)**

(72) Inventor: **Molt, Kenneth R.**
**5021 Cooper Road**
**Cincinnati Ohio 45242 (US)**

(74) Representative: **Warren, Anthony Robert et al**
**BARON & WARREN 18 South End Kensington**
**London W8 5BU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 070 092 B1

Courier Press, Leamington Spa, England.

**Description**

This invention relates to compositions for stabilising halogen-containing polymers and to the polymer-containing compositions comprising such stabilising compositions.

Halogen-containing polymers, especially chlorine-containing polymers, have attained a high degree of commercial significance and use. Polyvinyl chloride (PVC), in particular, is widely used in packaging, siding, pipe and extruded shapes. Such large scale and diverse use of the halogen-containing polymers, as exemplified by PVC, is the result, at least in part, of the stabilization of such polymers against degradation caused by light and/or heat. PVC is known to degrade upon prolonged exposure to light and/or heat during processing and use, with attendant darkening or change of color and loss of physical properties (e.g. tensile, flexural and impact strengths). Such degradation detracts from the usefulness of PVC and imposes restrictions on the conditions and apparatus for processing and manufacturing PVC articles. Thus, for example, the service life of a PVC article may be significantly limited, the conditions under which the PVC article is used severely restricted and the manufacturing conditions very narrow.

One particularly troublesome form of degradation of halogen-containing polymers occurs when they are processed into articles employing heat to melt or soften the polymer. Color changes can occur in the polymer during the first few minutes (e.g. about 1 to 10 minutes) of processing at high processing temperatures (e.g. about 175°C to 200°C). This color change during the first several minutes of exposure to high processing temperatures is commonly referred to as early color or early discoloration. Avoidance of such early color or early discoloration is notably important in a number of applications (e.g. plastic pipe) and is particularly important where white or light colored products are to be made. It is, of course, also important to prvent or reduce discoloration and deterioration of the organic polymer during extended exposure to high processing temperatures, as may be encountered in some processes or fabricating methods. This extended exposure to high processing temperatures can lead to a sudden catastrophic degradation of the polymer which transforms the polymer into a pitch-like abrasive material and can, especially in the case of halogen-containing organic polymers, cause the formation of corrosive materials, e.g. HCl, inside the fabricating equipment. This abrasion and corrosion can ruin the inner, highly-polished surfaces of the fabricating equipment and render the equipment essentially useless.

To prevent or reduce the discoloration and deterioration of halogen-containing polymers during processing at elevated temperatures and during exposure of the fabricated product to elevated temperatures under use conditions, the art has added various materials, known as stabilizers, to the polymers. Most notable among these stabilizers have been the organotin stabilizers. These organotin stabilizers have been found to be particularly effective in the prevention of early discoloration of halogen-containing polymers. However, while the organotin stabilizers are capable of lessening or preventing early discoloration, they have in recent years become increasingly expensive, with the result that in relatively low cost products such as pipe the cost of such stabilizers may be difficult to bear.

Attempts have been made to replace the organotin stabilizers, either in part or altogether, with lower cost materials. Various admixtures of organotin compounds with other organometallic compounds have thus been developed. One such admixture, disclosed in Japanese Kokai 7737,956 by Minagawa et al, contains at least one alkyl tin compound selected from monoalkyl and dialkyl tin compounds, and at least one mercaptide, salt or ester of mercaptocarboxylic acid, or salt or ester of maleic acid with metals selected from Mg, Ca, Sr, Ba, Zn, Sn or Zr. As the alkyl tin compounds there are disclosed such compounds as, for example, dimethyltin oxide, dimethyltin sulfide, dibutyltin bis (isooctylmercaptoacetate) and monobutyltin tris (isooctylmercaptopropionate). The metal mercaptides, salts or esters of mercaptocarboxylic acids include such compounds as, for example, zinc bis (isooctyl thioglycolate). The complete elimination of organotin compounds was attempted in Japanese Kokai 7589,451 to Shinkawa. Disclosed are stabilizers for halogen-containing resins containing organozinc compounds and organic acid alkali or alkaline earth metal salts. The organozinc compounds have the formula: Zn(SX) (Y) where SX is a mercaptan or mercaptate residue, and Y is the same as SX or an organic acid residue. An example of such organozinc compounds is

$$C_8H_{17}O\overset{\overset{O}{\|}}{C}CH_2S—Zn—S—CH_2\overset{\overset{O}{\|}}{C}OC_8H_{17}.$$

Likewise, U.S. Patent No. 2723,965 to Leistner et al discloses stabilizers for halogen-containing polymers which are organometallic compounds having the formula: R—S—Y—COOMe where R is aryl or alkyl, Y is alkylene, and Me is any metal other than an alkali metal, examples of which include the alkaline earth metals, cadmium, lead, zinc and tin.

The present invention consists in a composition for stabilizing a halogen-containg polymer against the deteriorative effects of heat, comprising a zinc mercaptoester and an alkali or alkaline earth metal compound or a magnesium compond, characterised in that it comprises:

(A) 15 to 18 wt. % of one or more zinc mercaptoesters having the formula:

$$Zn(S-(CH_2)_x-\overset{\overset{\displaystyle O}{\|}}{C}OR)_2 \qquad (I)$$

where x = 1 or 2; and R is a $C_1$ to $C_{20}$ straight or branched-chain alkyl or $C_2$ to $C_{20}$ alkenyl group; and

(B) 15 to 85 wt. % of one or more basic inorganic alkali or alkaline earth metal compounds or magnesium compounds; with or without

(C) up to 50 wt. % of one or more substituted dihydropyridines having the general formula:

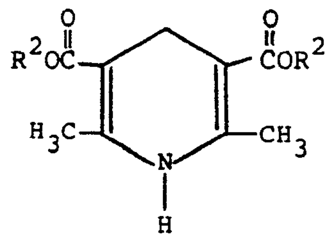

where $R^2$ is a $C_1$ to $C_{20}$ straight or branched-chain alkyl or $C_2$ to $C_{20}$ alkenyl group.

In accordance with the present invention there are also provided novel polymer compositions which have improved resistance to color change upon exposure to heat during processing and which comprise a halogen-containing polymer and a stabilizing amount of stabilizing composition according to the invention. These polymeric compositions are useful in the manufacture of rigid articles such as pipe.

Stabilizer compositions in accordance with the invention have been found to have improved effectiveness in stabilizing halogen-containing polymers against the deteriorative effects of heat. Polymers stabilized with the compositions of the invention have also been found to have improved resistance to color changes upon exposure to heat during processing.

The halogen-containing polymers which are stabilized by the stabilizer compositions of this invention and which are useful in the polymer compositions of this invention include, for example, halogenated polyolefin homopolymers, halogenated polyolefin copolymers, polymer blends containing a halogenated polyolefin homopolymer or copolymer, vinyl halide homopolymers, vinyl halide copolymers and polymer blends containing vinyl halide homopolymer or copolymers. As vinyl halide homopolymers, vinyl halide copolymers and polymer blends containing vinyl halide homopolymers or vinyl halide copolymers usable in the practice of this invention there, for example, may be used (1) polyvinyl chloride, polyvinylidene chloride, polyvinyl bromide, polyvinyl fluoride, polyvinylidene fluoride, (2) copolymers of vinyl chloride with a copolymerizable ethylenically unsaturated monomer such as vinylidene chloride, vinyl acetate, vinyl butyrate, vinyl benzoate, diethyl fumarate, diethyl maleate, other alkyl fumarates and maleates, vinyl propionate, methyl acrylate, 2-ethylhexyl acrylate, butyl acrylate, ethyl acrylate, and other alkyl acrylates, methyl methacrylate, ethyl methacrylate, butyl methacrylate, hydroxyethyl methacrylate and other alkyl methacrylates, methyl alpha-chloracrylate, styrene, vinyl ethers such as vinyl ethyl ether, vinyl chloroethyl ether, vinyl phenyl ether, vinyl ketones such as vinyl methyl ketone, vinyl phenyl ketone, 1-fluoro-1-chloroethylene, acrylonitrile, chloroacrylonitrile, allylidene diacetate, chloroallylidene diacetate, ethylene and propylene, and (3) polymer blends such as blends of polyvinyl chloride and polyethylene, polyvinyl chloride and chlorinated polyethylene, polyvinyl chloride and polymethyl methacrylate, polyvinyl chloride and polybutylmethacrylate, polyvinyl chloride and polystyrene, polyvinyl chloride and acrylonitrile-butadiene-styrene copolymer, and polyvinyl chloride and polyethylene and polymethyl methacrylate. Typical vinyl halide copolymers usable in this invention include vinyl chloride-vinyl acetate (87:13), vinyl chloride-vinylidene chloride (95:5), vinyl chloride-diethylfumarate (95:5), vinyl chloride-trichloroethylene (95:5) and vinyl chloride-2-ethylhexyl acrylate (80:20). The polymer blends usable in the practice of this invention comprise physical blends of at least two distinct polymeric species and contain from 25 to 95 weight percent of vinyl halide homopolymer. The vinyl halide copolymers usable in the practice of this invention are copolymers comprising from 25 to 95 mole percent of vinyl halide units.

The zinc mercaptoesters useful in the practice of this invention are organozinc compounds having two mercaptoester groups each bonded to the zinc atom through the sulfur atom, and have the general formula:

$$Zn(S-(CH_2)_x-\overset{\overset{\displaystyle O}{\|}}{C}OR)_2 \qquad (I)$$

where x = 1 or 2, R is a $C_1$ to $C_{20}$ straight or branched-chain alkyl or $C_2$ to $C_{20}$ alkenyl radical.

Examples of zinc mercaptoesters useful in the practice of this invention include, but are not limited to, the compounds illustrated in Table 1.

TABLE 1

| Zinc Mercaptoester Compound Designation | |
|---|---|
| A | $Zn(SCH_2\overset{\overset{O}{\|}}{C}OC_8H_{17})_2$ |
| B | $Zn(SCH_2CH_2\overset{\overset{O}{\|}}{C}OC_8H_{17})_2$ |
| C | $Zn(SCH_2\overset{\overset{O}{\|}}{C}OC_{18}H_{37})_2$ |
| D | $Zn(SCH_2CH_2\overset{\overset{O}{\|}}{C}OC_{18}H_{35})_2$ |
| E | $Zn(SCH_2\overset{\overset{O}{\|}}{C}OC_2H_5)_2$ |

The term basic inorganic alkali or alkaline earth metal compounds as used herein refers to compounds selected from oxides, hydroxides, sulfides, silicates, phosphates, borates and carbonates of alkali metals or alkaline earth metals. Preferably, the alkali metals are selected from Li, Na and K, and the alkaline earth metals are selected from Mg, Ca, Sr and Ba.

Examples of basic inorganic alkali or alkaline earth metal compounds include, but are not limited to, $Ca(OH)_2$, $Mg(OH)_2$, LiOH, $Na_3BO_4$, $K_2CO_3$, and sodium silicate.

The substituted dihydropyridines useful in the practice of this invention, and the method of their preparation, are disclosed in U.S. Patent No. 4,209,439 to Pigerol et al.

Examples of substituted dihydropyridines useful in this invention include, but are not limited to, the following:

| Substituted Dihydropyridine Number | |
|---|---|
| 1 | 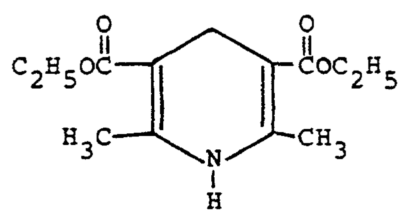 |
| 2 | 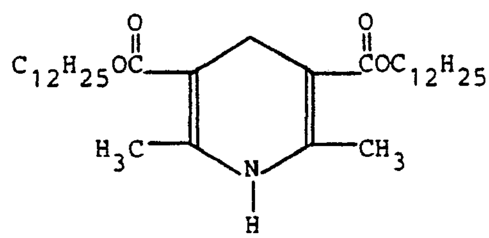 |

The stabilizer compositions preferably comprise 40% to 60% of zinc mercaptoester, 40% to 60% of basic inorganic alkali or alkaline earth metal or magnesium compound, and, when employed, about 1% to 50%, preferably 10% to 30% of substituted dihydropyridine, all percentages being by weight based on the total weight of the stabilizer composition.

Likewise the amount of stabilizer composition employed in the practice of the polymer compositions of this invention may vary over a wide range. It is only necessary that there be present in the polymer composition at least a stabilizingly effective amount of the stabilizer compositions. In general, as little as

0.05 parts by weight of stabilizer composition per hundred parts by weight of halogen-containing polymer will be stabilizingly effective. While there is no critical upper limit to the amount of stabilizer composition which can be employed, amounts in excess of about 15 parts by weight of stabilizer composition per hundred parts by weight of halogen-containing polymer do not yield an increase in effectiveness commensurate with the additional amount of stabilizer employed. Preferably, the stabilizer compositions of this invention are employed in amounts from about 0.2 to about 7 parts by weight per hundred parts of halogenated polymer.

In the practice of the polymer composition of this invention there may be present, in addition to the halogen-containing polymer and stabilizer composition, conventional additives such as fillers, pigments, plasticizers, dyes, lubricants, antioxidants and ultraviolet light stabilizers well known in the plastics art. Among the fillers, such materials as calcined clays, calcium carbonate and talcs may be used. Such materials as titanium dioxide, carbon black and iron oxide may be employed as pigments. Included among the well known platicizers which are usable are phthalates, sebacates, adipates, phosphates and fatty esters having between 16 and 150 carbon atoms. Well known lubricants which may be used include hydrocarbon waxes, stearyl stearate, cetyl palmitate and other ester waxes. Useful antioxidants include tricresyl phosphite, 2,6-di-t-butyl-4-methyl phenol, 2,6-di-t-butyl-4-decycloxy-phenol and 2-t-butyl-4-octadecyloxy-phenol.

Methods well-known in the art may be employed to prepare the stabilizer compositions of this invention using conventional equipment. The components may be blended together in any order in any convenient manner which provides uniform disperson of each component through the mixture.

The polymer compositions according to this invention may be prepared by methods well known in the art and by the use of conventional equipment (e.g. a Henschel blender). One such method comprises blending the premixed stabilizer composition to the halogen-containing polymer on a two roll mill. In another method the stabilizer composition may be added to the halogen-containing polymer with continuous blending in a Henschel blender. The important consideration is that the stabilizer composition and halogen-containing polymer be thoroughly blended together.

The stabilized halogen-containing polymer compositions of this invention may be used to form articles of manufacturer, e.g. pipe. A variety of conventional molding techniques may be employed to form the stabilized compositions into any desired shape.

The following examples illustrate this invention. Unless otherwise indicated, in the examples and throughout this specification, all amounts, parts and percentages are by weight.

Several mixtures are prepared by dry blending at 110°C in a Henschel high intensity mixer (Model 2JSS) 100.0 parts of polyvinyl chloride (GEON 103EP—F—76 available commercially from B. F. Goodrich Chemical Company) with 3.0 parts of fine particle size calcium carbonate coated with calcium stearate, 1.0 part of titanium dioxide, 1.2 parts of paraffin wax (ADVAWAX® 165 paraffin wax available commercially from Carstab Corporation), 0.60 part of calcium stearate, 0.15 part of an oxidized low molecular weight ethylene homopolymer (AC629A available commercially from Allied Chemical Corporation) and each in turn of the stabilizer compositions listed in Table A in the amounts indicated in Table A, said amounts being parts by weight per hundred parts of polyvinyl chloride. The resulting mixture is masticated on a two roll mill at about 193°C. Samples are taken at one minute intervals beginning after the first introduction of the mix to the mill.

The appearance of each sample taken from the mill is evaluated using the following scale:

10 9 8 7 6 5 4 3 2 1 0

White ————→ Tan-Orange ————→ Burn

The results of these tests are indicated in Table A.

TABLE A

| Ex. No. | Stabilizer Composition | Parts by Weight | Minutes of Milling 1 | 2 | 3 | 4 | 5 | 6 | 7 | 8 | 9 | 10 |
|---|---|---|---|---|---|---|---|---|---|---|---|---|
| | | | Colour | | | | | | | | | |
| 1* | Zinc compound A from Table I | 0.40 | 10 | 9 | 0 | 0 | 0 | 0 | 0 | 0 | 0 | 0 |
| 2 | Zinc compound A from Table I | 0.30 | 10 | 10 | 9 | 8 | 6 | 5 | 5 | 4 | 4 | 4 |
| | $Ca(OH)_2$ | 0.30 | | | | | | | | | | |
| 3 | Zinc compound A from Table I | 0.30 | | | | | | | | | | |
| | Subst. dihydropyridine no. 1 | 0.10 | 10 | 10 | 10 | 10 | 9 | 9 | 9 | 8 | 8 | 8 |
| | $Ca(OH)_2$ | 0.30 | | | | | | | | | | |
| 4 | Zinc compound A from Table I | 0.20 | | | | | | | | | | |
| | Subst. dihydropyridine no. 1 | 0.20 | 10 | 10 | 9 | 8 | 8 | 7 | 7 | 6 | 5 | 4 |
| | Ca(OH)2 | 0.20 | | | | | | | | | | |
| 5 | Zinc compound A from Table I | 0.10 | | | | | | | | | | |
| | Subst. dihydropyridine no. 1 | 0.40 | 10 | 9 | 8 | 7 | 6 | 5 | 5 | 4 | 4 | 3 |
| | $Ca(OH)_2$ | 0.10 | | | | | | | | | | |
| 6 | Zinc compound B from Table I | 0.30 | | | | | | | | | | |
| | Subst. dihydropyridine no. 2 | 0.10 | 10 | 10 | 9 | 9 | 8 | 7 | 6 | 5 | 5 | 5 |
| | $Na_2CO_3$ | 0.30 | | | | | | | | | | |
| 7 | Zinc compound C from Table I | 0.30 | | | | | | | | | | |
| | Subst. dihydropyridine no. 1 | 0.10 | 10 | 10 | 10 | 9 | 9 | 8 | 8 | 7 | 6 | 5 |
| | $Mg(OH)_2$ | 0.30 | | | | | | | | | | |
| 8 | Zinc compound A from Table I | 0.30 | | | | | | | | | | |
| | Subst. dihydropyridine no. 1 | 0.10 | 10 | 10 | 10 | 9 | 8 | 7 | 6 | 5 | 4 | 3 |
| | $Na_3PO_4$ | 0.50 | | | | | | | | | | |
| 9 | Zinc compound A from Table I | 0.30 | | | | | | | | | | |
| | Subst. dihydropyridine no. 1 | 0.10 | 10 | 10 | 10 | 9 | 9 | 8 | 7 | 6 | 5 | 5 |
| | $Sr(OH)_2.8H_2O$ | 0.90 | | | | | | | | | | |

* For comparison purposes only.

**Claims**

1. A composition for stabilizing a halogen-containing polymer against the deteriorative effects of heat comprising a zinc mercaptoester and an alkali or alkaline earth metal compound or a magnesium compound, characterised in that it comprises:

(A) 15 to 85 wt.% of one more zinc mercaptoesters having the general formula:

$$Zn[S-(CH_2)_x-\overset{\overset{\displaystyle O}{\|}}{C}OR]_2 \quad (I)$$

Where x = 1 or 2; and R is a $C_1$ or $C_{20}$ straight or branched-chain alkyl or $C_2$ to $C_{20}$ alkenyl group; and

(B) 15 to 85 wt.% of one or more basic inorganic alkali or alkaline earth metal compounds or magnesium compounds, with or without

(C) Up to 50 wt.% of one or more substituted dihydropyridines having the general formula:

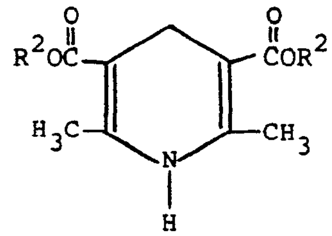

where $R^2$ is a $C_1$ to $C_{20}$ straight or branched-chain alkyl or $C_2$ to $C_{20}$ alkenyl group.

2. The composition claimed in claim 1, further characterised in that the basic inorganic alkali or alkaline earth metal compound is an oxide, hydroxide, sulfide, silicate, phosphate, borate or carbonate of magnesium or of an alkali or alkaline earth metal.

3. The composition claimed in claim 2 further characterised in that the basic inorganic alkali or alkaline earth metal compound is $Mg(OH)_2$ or $Ca(OH)_2$.

4. The composition claimed in any of claims 1 to 3 further characterised in that the zinc mercaptoester is zinc bis (isooctylthioglycolate) and the basic inorganic alkali or alkaline earth metal compound is $Ca(OH)_2$.

5. The composition claimed in any of claims 1 to 3 further characterised in that the zinc mercaptoester is zinc bis (isooctylthioglycolate), and basic inorganic alkali or alkaline earth metal compound is $Ca(OH)_2$, and the substituted dihydropyridine is 2,6-dimethyl-3,5-di(carboxyethyl) dihydropyridine.

6. The composition claimed in any of claims 1 to 4 further characterised in that it comprises 40 to 60% of zinc mercaptoester, and 40 to 60% of basic inorganic alkali or alkaline earth metal compound, all percentages being by weight based on the total weight of the composition.

7. The composition claimed in any of claims 1 to 6 further characterised in that the composition comprises 10 to 30% of said substituted dihydropyridine, said percentages being by weight based on the total weight of the composition.

8. A polymer composition stabilized against the deteriorative effects of heat comprising a halogen-containing polymer characterised in that it includes a stabilizingly effective amount of a composition according to any of claims 1 to 7.

9. A shaped article such as a pipe comprising a halogen-containing polymer characterised in that it includes a stabilizingly effective amount of the composition according to any of claims 1 to 7.

**Patentansprüche**

1. Zusammensetzung zur Stabilisierung eines Halogen enthaltenden Polymersgegen die schädigende Wirkung von Wärme enthaltend einen Zinkmerkaptoester und eine Alkali- oder Erdalkalimetallverbindung oder eine Magnesiumverbindung, dadurch gekennzeichnet, daß sie enthält:

(A) 15 bis 85 Gew.-% eines oder mehrerer Zinkmerkaptoester mit der allgemeinen Formel:

$$Zn[S-(CH_2)_x-\overset{\overset{O}{/\!/}}{C}OR]_2 \qquad (I)$$

worin X = 1 oder 2; und R eine geradkettige oder verzweigte $C_1$-bis $C_{20}$-Alkylgruppe oder $C_2$-bis $C_{20}$-Alkylengruppe ist; und

(B) 15 bis 85 Gew.-% einer oder mehrerer basischer anorganischer Alkali- oder Erdalkalimetallverbindungen oder Magnesiumverbindungen mit oder ohne

(C) bis zu 50 Gew.% eines oder mehrer substituierter Dihydropyridine mit der allgemeinen Formel:

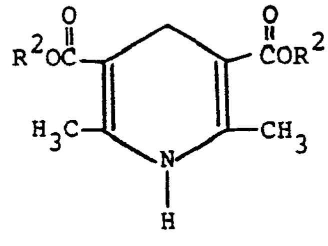

worin $R^2$ eine geradkettige oder verzweigte $C_1$- bis $C_{20}$-Alkylgruppe oder $C_2$- bis $C_{20}$-Alkylengruppe ist.

2. Zusammensetzung nach Anspruch 1, weiters dadurch gekennzeichnet, daß die basische anorganische Alkali- oder Erdalkalimetallverbindung ein Oxid, Hydroxid, Sulfid, Silikat, Phosphat, Borat oder Karbonat des Magnesiums oder eines Alkali- oder Erdalkalimetalls ist.

3. Zusammensetzung nach Anspruch 2, weiters dadurch gekennzeichnet, daß die basische anorganische Alkali- oder Erdalkalimetallverbindung $Mg(OH)_2$ oder $Ca(OH)_2$ ist.

4. Zusammensetzung nach einem der Ansprüche 1 bis 3, weiters dadurch gekennzeichnet, daß der Zinkmercaptoester Zink-bis-(isooctylthioglycolat) und die basische anorganische Alkali- oder Erdalkalimetallverbindung $Ca(OH)_2$ ist.

5. Zusammensetzung nach einem der Ansprüche 1 bis 3, weiters dadurch gekennzeichnet, daß der Zinkmercaptoester Zink-bis-(isooctylthioglycolat), die basische anorganische Alkali- oder Erdalkalimetallverbindung $Ca(OH)_2$ und das substituierte Dihydropyridin 2,6-Dimethyl-3,5-di-(carboxyethyl)-dihydropyridin ist.

6. Zusammensetzung nach einem der Ansprüche 1 bis 4, weiters dadurch gekennzeichnet, daß sie 40% bis 60% Zinkmercaptoester und 40% bis 60% basische anorganische Alkali- oder Erdalkalimetallverbindung enthält, wobei alle Prozentangaben auf das Gesamtgewicht der Zusammensetzung bezogen sind.

7. Zusammensetzung nach einem der Ansprüche 1 bis 6, weiters dadurch gekennzeichnet, daß die Zusammensetzung 10% bis 30% des genannten substituierten Dihydropyridins enthält, wobei die Prozentsätze auf das Gesamtgewicht der Zusammensetzung bezogen sind.

8. Polymerzusammensetzung, welche gegen die schädlichen Wirkungen von Wärme substituiert ist und Halogen enthaltendes Polymer enthält, dadurch gekennzeichnet, daß sie eine stabilisierende Menge einder Zusammensetzung nach einem der Ansprüche 1 bis 7 umfaßt.

9. Geformter Gegenstand, wie z.B. ein Rohr, enthaltend ein Halogen enthaltendes Polymer, dadurch gekennzeichnet, daß er eine stabilisierende Menge der Zusammensetzung nach einem der Ansprüche 1 bis 7 umfaßt.

**Revendications**

1. Composé destiné à stabiliser les polymères contenant des halogènes contre les effets destructeurs de la chaleur, comprenant un mercaptoester de zinc et un composé alcalin ou de métal alcalino-terreux, ou un composé de magnesium, caractérisé en ce qu'il contient:

A. de 15 à 86% en poids d'un ou de plusieurs mercaptoesters de zinc de formule générale:

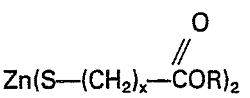

(I)

dans laquelle x = 1 ou 2 et R est un groupe alcoyle $C_1$ à $C_{20}$ droite ou ramifié, ou un groupe alcoynyle $C_2$ à $C_{20}$, droit ou ramifié, et

B. de 15 à 85% en poids d'un ou de plusieurs composés basiques non-organiques d'alcali ou de métaux alcalino-terreux ou de composés de magnesium, et ceci, avec ou sans

C. une teneur allant jusqu'à 50% maximum d'une ou de plusieurs dihydropyridines de substitution de formule générale:

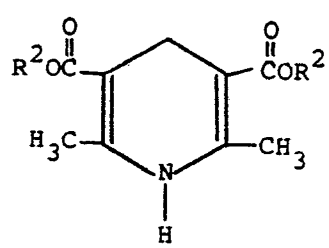

dans laquelle $R^2$ estun groupe alcoyle $C_1$ à $C_{20}$ droit ou ramifié ou un groupe alcoynyle $C_2$ à $C_{20}$ droit ou ramifié.

2. Composé de la revendication 1, caractérisé de plus par le fait que le composé basique non organique alcalin ou de métal alcalino-terreux est un oxyde, un hydroxyde, ul sulfure, un silicate, phosphate, borate ou un carbonate de magnesium ou d'alcali ou de métal alcalino-terreux.

3. Composé selon revendication 2 caractérisé par le fait que le composé basique non organique alcalin ou de métal alcalino-terreux est $Mg(OH)_2$ ou $Ca(OH)_2$.

4. Composé selon l'une des revendications 1 à 3 caractérisé par le fait que le mercaptoester de zinc est un zinc bis (isooctylthioglycolate) et le composé basique non organique alcalin ou alcalino-terreux est $Ca(OH)_2$.

5. Composé selon l'une des revendications 1 à 3, caractérisé de plus par le fait que le mercaptoester de zinc est le zinc bis (isooctylthioglycolate), le composé basique non-organique alcalin ou alcalino-terreux est $Ca(OH)_2$ et la dihydropyridine de substitution est la dihydropyridine 2,6-dimethyle-3,5-di(carboxyéthyle).

6. Composé selon l'une des revendications 1 à 4 caractérisé par le fait qu'il comprend de 40 à 60% de mercaptoester de zinc, et de 40 à 60% composé basique non organique d'alcali ou de métal alcalino-terreux, tous ces pourcentages s'entendant en poids par rapport au poids total du composé.

7. Composé selon l'une des revendication 1 à 6, caractérisé par le fait que le composé contient de 10 à 30% de ladite dihydropyridine de substitution, ces pourcentages s'entendant en poids par rapport au poids total du composé.

8. Composé de polymère stabilisé contre les effets destructeurs de la chaleur contenant un polymère halogéné, caractérisé par le fait qu'il contient une quantité de composé conforme à l'une des revendications 1 à 7, suffisante pour avoir un effet stabilisant effectif.

9. Article de forme tel que tuyau contenant un polymère halogéné caractérisé par le fait qu'il contient une quantité composé conforme à l'une des revendications 1 à 7, suffisante pour avoir un effet stabilisant effectif.